# FASCICULE DE BREVET EUROPEEN

(11) **EP 0 837 331 B1**
(45) Date de publication et mention de la délivrance du brevet: **28.05.2003**
(21) Numéro de dépôt: 97402351.7
(22) Date de dépôt: 07.10.1997
(51) Int. Cl.: G01N 35/02

(54) **Appareil automatique de dosage immunologique**
Automatische immunologische Analysevorrichtung
Automatic immunological analyser

(30) Priorité: 15.10.1996 FR 9612546
(43) Date de publication de la demande: 22.04.1998
(73) Titulaire: LABORATOIRES MERCK-CLEVENOT, 94736 Nogent-sur-Marne Cédex (FR)
(72) Inventeur: Gicquel, Thierry, 95800 Courdimanche (FR); Lentwojt, Edouard, 60340 Saint Leu D'Esserent (FR)
(74) Mandataire: Ramey, Daniel

(56) Documents cités:
- EP-A- 0 061 431
- WO-A-91/07662
- WO-A-96/14582
- FR-A- 2 247 719
- PATENT ABSTRACTS OF JAPAN vol. 018, no. 670 (P-1845), 16 décembre 1994 & JP 06 265559 A (EISAI CO LTD), 22 septembre 1994,

## Description

L'invention concerne un appareil de dosage immunologique de différentes substances dans des échantillons biologiques, permettant une automatisation des méthodes de dosage du type ELISA, RIA, FIA, LIA, FPIA, CLIA, etc....

Des appareils de ce type sont déjà décrits dans les Demandes Internationales WO-9107662 et WO-9614582 auxquelles on peut se reporter pour une description des dosages réalisés, ces appareils connus comprenant pour l'essentiel des moyens de support, de guidage et de déplacement pas à pas de cuvettes de réaction sur un trajet comprenant un nombre prédéterminé de positions, un plateau tournant de support d'échantillons à analyser, un plateau tournant de support de réactifs, des moyens de prélèvement de quantités déterminées d'échantillons et de réactifs et d'injection de ces prélèvements dans les cuvettes de réaction, des moyens de lavage des cuvettes, des moyens de lecture optique des résultats de dosage et un système informatique de commande permettant l'exécution de cycles d'analyse préalablement programmés, correspondant à des dosages du type monoréactif ou bi-réactif, ces appareils connus ayant une cadence de fonctionnement de l'ordre de 120 dosages par heure pour le premier d'entre-eux et de 360 dosages par heure pour le second.

L'appareil décrit dans la Demande Internationale WO-9614582 se distingue en outre en ce qu'il est conçu pour fonctionner avec des modules de réaction qui sont des pièces moulées en matière plastique comprenant plusieurs cuvettes de réaction alignées et solidaires les unes des autres, ces modules de réaction étant fabriqués en grande série à un prix de revient très faible, ce qui permet de les jeter après un usage unique. De plus, ces modules de réaction sont empilables ou gerbables, ce qui facilite leur conditionnement ainsi que leur empilement dans des moyens d'alimentation automatique de l'appareil.

Cet appareil connu est également caractérisé par des moyens de guidage et de déplacement des modules de réaction le long d'une voie de déplacement en boucle ouverte, en forme de U, aux extrémités de laquelle sont prévus respectivement des moyens d'alimentation automatique en modules de réaction et des moyens d'éjection automatique des modules de réaction.

Cet appareil a pour avantage de fonctionner à cadence élevée (360 dosages à l'heure), mais est plus encombrant et plus coûteux que celui décrit dans la Demande Internationale WO-9107662.

La présente invention a pour objet un appareil automatique de dosage immunologique, qui permet de combiner les avantages de ces deux appareils connus, tout en évitant leurs inconvénients.

Elle propose, à cet effet, un appareil du type précité, comprenant des moyens de support, de guidage et de déplacement pas à pas d'ensembles de cuvettes de réaction sur un trajet comprenant un nombre prédéterminé de positions, des moyens de support d'échantillons à analyser, des moyens de support de réactifs, des moyens de prélèvement de quantités déterminées d'échantillons et de réactifs et d'injection de ces prélèvements dans les cuvettes de réaction, ainsi que des moyens de lavage des cuvettes, des moyens de lecture des résultats et des moyens d'alimentation en ensembles de cuvettes de réaction et d'éjection des ensembles de cuvettes usagés, caractérisé en ce que le trajet des ensembles de cuvettes de réaction est de forme rectangulaire et comprend deux grands côtés définis par des rails rectilignes parallèles de support et de guidage des ensembles de cuvettes et deux petits côtés définis par des moyens de déplacement transversal des ensembles de cuvettes sur trois positions comprenant deux positions d'extrémité sur les grands côtés du trajet et une position intermédiaire qui constitue la position d'éjection d'un ensemble de cuvettes usagées et la position d'alimentation d'un ensemble de cuvettes neuves.

Les moyens de déplacement des ensembles de cuvettes selon l'invention sont plus simples et plus sûrs que ceux utilisés dans la technique antérieure, notamment du fait que les trajectoires des ensembles de cuvettes sont rectilignes et ne comprennent pas de parties courbes, le transfert des ensembles de cuvettes dans les trois positions prévues sur les petits côtés de leur trajet rectangulaire permettant une simplification de l'amenée des ensembles de cuvettes neuves et de l'éjection automatique des ensembles de cuvettes usagées.

Selon une autre caractéristique de l'invention, les moyens de déplacement transversal des ensembles de cuvettes sont actionnés pendant les intervalles entre deux pas de déplacement des ensembles de cuvettes sur les grands côtés du trajet.

Dans un mode de réalisation préféré de l'invention, les moyens de déplacement des ensembles de cuvettes sur les grands côtés du trajet comprennent une courroie crantée qui vient en prise avec des nervures des rebords longitudinaux des ensembles de cuvettes et qui est guidée le long du rail extérieur de chaque grand côté du trajet, tandis que les moyens de déplacement transversal comprennent des moyens de prise de deux ensembles de cuvettes et des moyens de soulèvement, de déplacement transversal et de descente des moyens de prise, ces derniers comprenant une plaque verticale transversale déplaçable sous les ensembles de cuvettes et engageable entre deux cuvettes d'un ensemble pour le soulever des rails de support et le déplacer d'une position dans l'autre.

Les moyens d'alimentation de l'appareil en ensembles de cuvettes de réaction comprennent des magasins de stockage de piles d'ensembles de cuvettes emboîtés les uns dans les autres, un chariot de capture et de déplacement horizontal d'un ensemble de cuvettes, guidé sous les extrémités inférieures ouvertes des magasins et déplaçable jusqu'à la position intermédiaire précitée formant position d'alimentation et position d'éjection, les magasins étant équipés de bras pivotants qui retiennent l'ensemble de cuvettes inférieur de chaque pile stockée et qui sont écartés par le chariot à son passage sous la pile pour libérer l'ensemble de cuvettes inférieur et le laisser tomber dans un logement agencé dans le chariot lorsque ce logement n'est pas déjà occupé par un autre ensemble de cuvettes de réaction.

Les moyens d'éjection des ensembles de cuvettes usagées comprennent une glissière ou une ouverture de chute formée dans l'alignement de la position intermédiaire précitée, de sorte que l'amenée d'un ensemble de cuvettes neuves dans cette position intermédiaire par les moyens d'alimentation provoque le déplacement jusqu'à la glissière ou l'ouverture de chute de l'ensemble de cuvettes usagées occupant cette position intermédiaire.

De façon générale, l'appareil selon l'invention bénéficie de tous les avantages liés à l'utilisation des ensembles modulaires de cuvettes de réaction décrits dans la Demande Internationale WO-9614582, tout en simplifiant les moyens de déplacement de ces ensembles de cuvettes et en réduisant leur encombrement, et conserve les avantages de prix de revient de l'appareil décrit dans la Demande Internationale WO-9107662 tout en simplifiant et en améliorant l'utilisation de ce dernier.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique de dessus de l'appareil selon l'invention ;
- la figure 2 est une vue schématique en perspective d'un ensemble de cuvettes de réaction ;
- la figure 3 est une vue schématique partielle de dessus des moyens de support et d'entraînement d'un ensemble de cuvettes ;
- les figures 4 et 5 sont des vues en élévation et en coupe transversale représentant schématiquement les moyens de positionnement d'un ensemble de cuvettes ;
- la figure 6 est une vue schématique en coupe verticale des moyens d'alimentation en ensembles de cuvettes de réaction ;
- les figures 7 et 8 sont des vues schématiques partielles de dessus illustrant le fonctionnement de ces moyens d'alimentation ;
- la figure 9 est une vue schématique en coupe transversale verticale des moyens de déplacement transversal des ensembles de cuvettes ;
- les figures 10 et 11 sont des vues schématiques en coupe longitudinale verticale et de dessus respectivement de ces moyens de déplacement transversal ;
- les figures 12, 13, 14 et 15 illustrent schématiquement le fonctionnement des moyens de déplacement des ensembles de cuvettes dans l'appareil selon l'invention.

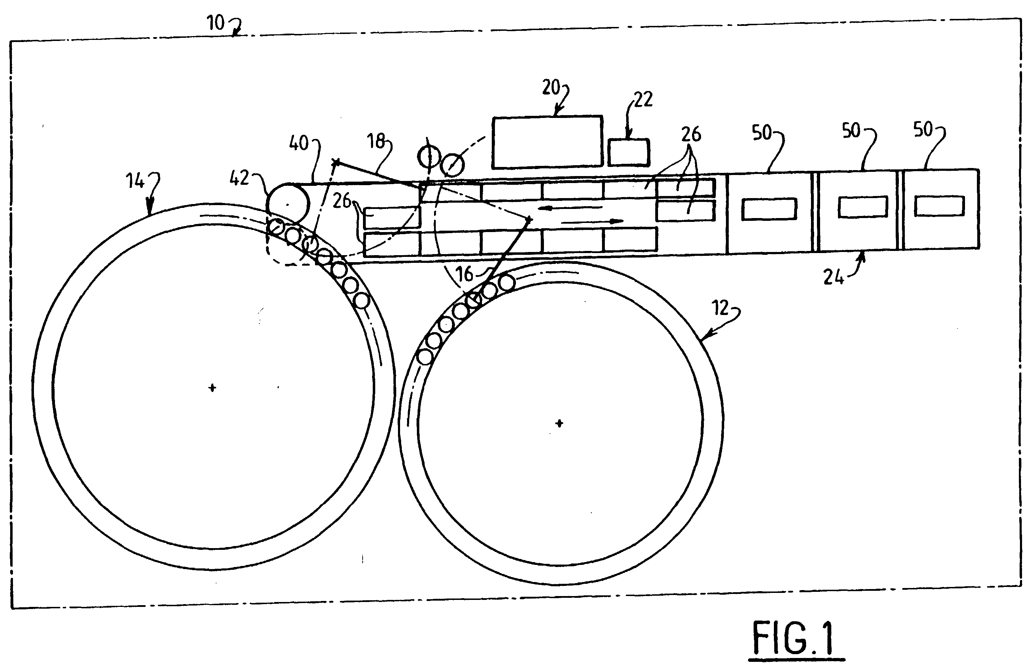

L'appareil selon l'invention, dont la structure générale est représentée très schématiquement en figure 1, comprend un châssis 10 sur lequel sont montés un plateau tournant 12 de support d'échantillons à analyser, un plateau tournant 14 de support de réactifs de dosage, des moyens 16, 18 de prélèvement d'une quantité déterminée d'échantillons et d'une quantité déterminée de réactifs respectivement et de dépôt de ces quantités prélevées dans une cuvette de réaction, ces moyens étant du même type que ceux qui ont été décrits dans la Demande Internationale WO-9614582.

Les réactifs utilisés sont du type à billes magnétiques et l'appareil selon l'invention comprend des moyens 20 de lavage ou de rinçage de ces billes magnétiques, qui sont du même type que ceux déjà décrits dans les Demandes Internationales précitées et qui comprennent des aiguilles d'aspiration et d'injection de liquide, à déplacement vertical, et des aimants permanents disposés de chaque côté du trajet des cuvettes de réaction pour attirer, par attraction magnétique, les billes magnétiques des réactifs et les fixer temporairement sur les parois des cuvettes de réaction. Les moyens 20 comprennent également une aiguille de dépôt d'un substrat dans les cuvettes de réaction, agencée immédiatement en aval des aiguilles d'injection et d'aspiration de liquide de lavage.

Les moyens 22 de lecture optique des résultats de dosage, du même type que ceux déjà décrits dans les Demandes Internationales précitées, sont agencés sur le châssis 10 au voisinage des moyens 20 d'injection et de lavage.

L'appareil selon l'invention comprend encore des moyens de déplacement d'ensembles de cuvettes de réaction sur un trajet de forme rectangulaire, à une extrémité duquel sont prévus des moyens 24 d'alimentation automatique en ensembles de cuvettes de réaction et d'éjection de ces cuvettes, ces moyens étant décrits plus en détail dans ce qui suit.

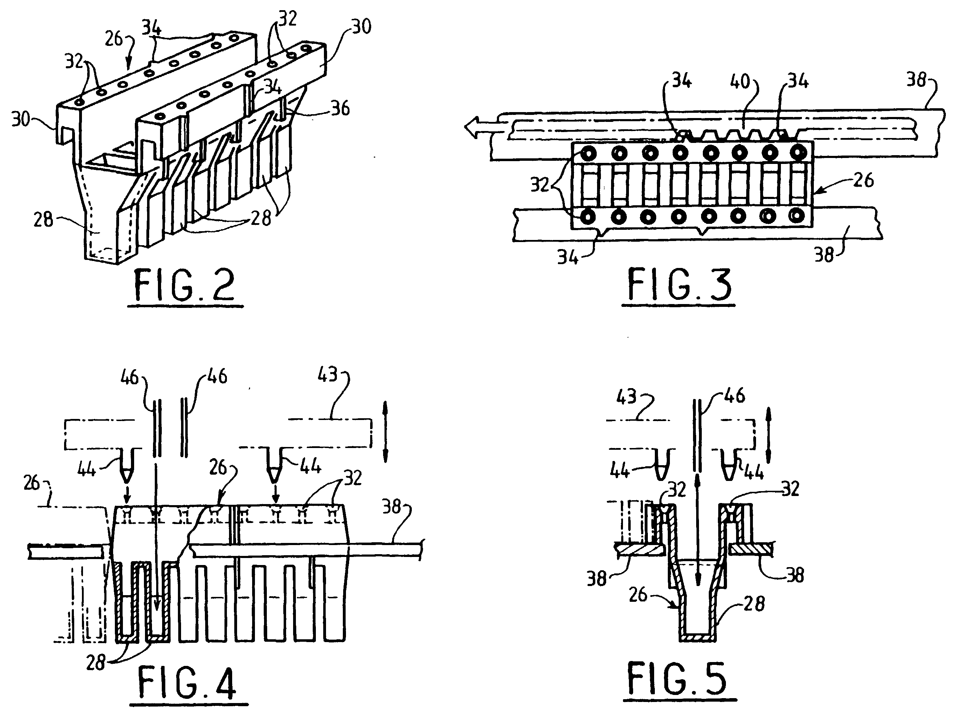

Les ensembles de cuvettes de réaction et leurs moyens de déplacement et de positionnement sont représentés schématiquement dans les figures 2 à 5.

Les ensembles 26 de cuvettes de réaction (figure 2) sont réalisés d'une pièce par moulage de matière plastique transparente et comprennent chacun huit cuvettes de réaction 28 alignées sur l'axe longitudinal de l'ensemble 26 et raccordées les unes aux autres, chaque ensemble comprenant deux rebords longitudinaux supérieurs 30 en forme de L s'étendant au-dessus des extrémités ouvertes des cuvettes 28.

Chaque rebord longitudinal 30 comprend, au niveau de chaque cuvette 28, un orifice tronconique 32 servant au positionnement précis de l'ensemble 26 dans certains postes de l'appareil selon l'invention, et les faces latérales extérieures des rebords 30 comportent chacune deux nervures verticales 34 destinées à coopérer avec les moyens d'entraînement des ensembles 26.

Comme déjà décrit dans la Demande Internationale WO-9614582, les cuvettes 28 sont des tronçons de tube à section rectangulaire, fermés à leur extrémité inférieure et élargis à leur extrémité supérieure, ce qui permet de gerber ou d'empiler verticalement les ensembles 26 en les emboîtant partiellement les uns dans les autres, les parties inférieures des cuvettes 28 d'un ensemble 26 pénètrant dans les extrémités supérieures élargies des cuvettes 28 d'un ensemble inférieur de cuvettes de réaction. Cet emboîtement est facilité par le fait que les faces intérieures des rebords longitudinaux 30 divergent légèrement l'une de l'autre vers le haut à partir des extrémités supérieures ouvertes des cuvettes 28.

Des nervures verticales 36 sont formées sur les flancs des extrémités supérieures élargies des cuvettes 28 et s'étendent vers le bas sur une faible distance, les extrémités inférieures de ces nervures 36 étant destinées à buter sur les faces supérieures des rebords 30 d'un ensemble inférieur 26 dans une pile verticale d'ensembles de cuvettes de réaction.

Le long des grands côtés de leur trajet rectangulaire dans l'appareil, les ensembles 26 de cuvettes reposent par leurs rebords longitudinaux 30 sur des rails ou profilés rectilignes parallèles 38 entre lesquels s'étendent les cuvettes 28. Une courroie crantée 40 est guidée sur le rail extérieur 38 de chaque grand côté du trajet précité et passe sur quatre poulies dont deux sont transversalement juxtaposées à l'emplacement 42 représenté en figure 1 et dont les deux autres sont transversalement juxtaposées à l'extrémité des moyens d'alimentation 24, l'une de ces poulies étant motrice pour le déplacement pas à pas des ensembles de cuvettes 26 sur des distances égales à l'entraxe entre les cuvettes de réaction 28.

Les crans de la courroie 40 viennent en prise avec les nervures verticales 34 des rebords longitudinaux 30 des ensembles de cuvettes 26 qui sont déplacés par glissement sur les rails 38, sans effort notable en raison de leur faible poids et du frottement doux entre les matières des ensembles 26 et des rails 38.

Des moyens de positionnement précis des ensembles 26 sont prévus sur leur trajet dans l'appareil, aux endroits où des produits doivent être déposés dans les cuvettes de réaction ou évacués de celles-ci.

Ces moyens de positionnement sont agencés au niveau des moyens 20 de lavage. Ils comprennent des plaques horizontales 43 qui sont déplaçables verticalement et qui comportent sur leur face inférieure des rangées de doigts verticaux 44 destinés à être engagés dans les orifices 32 des rebords verticaux des ensembles de cuvettes 26, pour les positionner en direction longitudinale et en direction transversale de façon précise par rapport à des aiguilles d'injection ou d'aspiration 46 qui peuvent ainsi être descendues dans les cuvettes de réaction 28 jusqu'au voisinage du fond de ces cuvettes sans risquer de buter sur une paroi solide.

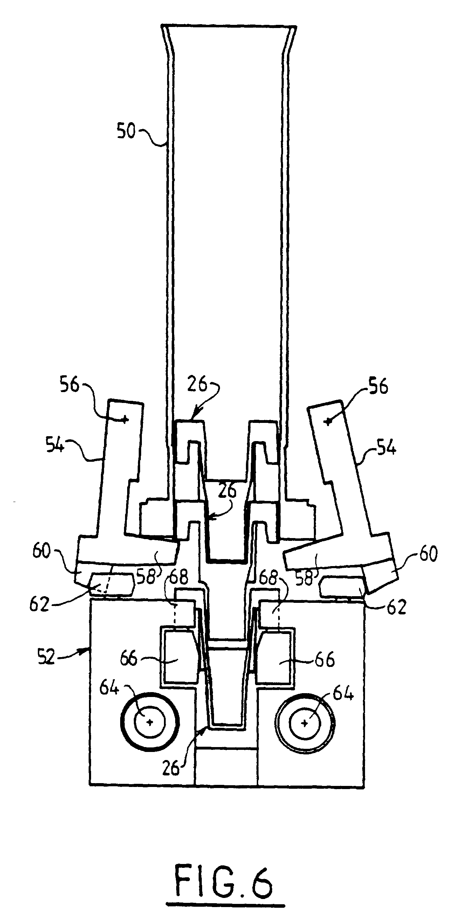

La structure des moyens 24 d'alimentation en ensembles de cuvettes neuves et leur fonctionnement sont illustrés schématiquement aux figures 6 à 8.

Ces moyens 24 comprennent trois magasins 50 contenant des piles verticales d'ensembles de cuvettes 26 emboîtés les uns dans les autres, ces magasins 50 étant des conduits verticaux à extrémité supérieure ouverte pour permettre le chargement d'une pile d'ensembles de cuvettes 26 et à extrémité inférieure ouverte pour la pose d'un ensemble de cuvettes 26 sur un chariot 52 de transport de cet ensemble jusqu'à une position d'alimentation prévue à une extrémité du trajet rectangulaire précité.

Chaque magasin 50 est équipé de deux bras verticaux 54 montés pivotants autour d'axes horizontaux 56 et portant à leurs extrémités inférieures des doigts perpendiculaires 58 destinés à être engagés sous les extrémités inférieures des magasins 50 pour retenir l'ensemble inférieur d'une pile verticale d'ensembles 26 contenus dans ce magasin, cet ensemble inférieur 26 étant porté par ses rebords verticaux 30 qui reposent sur les extrémités des doigts 58 des bras 54.

Les bras 54 comprennent encore un talon 60 destiné à coopérer avec un galet 62 du chariot 52 de telle sorte que, au passage des galets 62 sur les talons 60, les bras 54 s'écartent vers l'extérieur pour laisser échapper l'ensemble 26 inférieur d'une pile contenue dans le magasin 50. Des ressorts de rappel, non représentés, permettent de ramener les bras 54 en position sensiblement verticale contre le magasin 50 pour la retenue de la pile d'ensembles 26, lorsque les talons 60 sont libérés par les galets 62.

Le chariot 52 est déplacé en translation horizontale sous les magasins 50 par deux tiges filetées 64 entraînées en rotation par un moteur électrique et vissées dans des écrous solidaires du chariot 52.

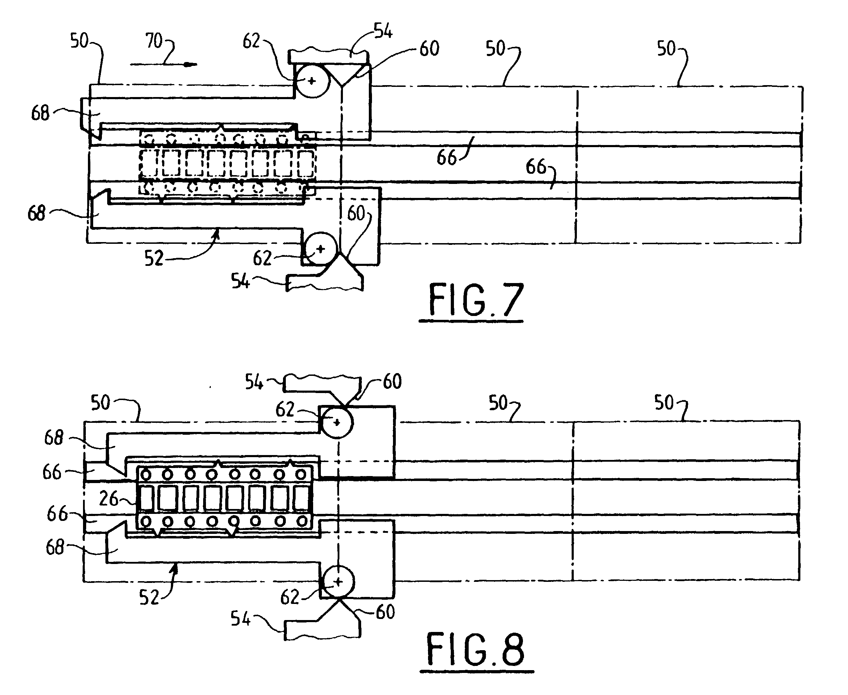

Deux rails 66 s'étendent parallèlement aux tiges filetées 64 dans des évidements formés dans le chariot 52 pour supporter par ses rebords longitudinaux 30 l'ensemble 26 de cuvettes de réaction qui vient d'être libéré d'une pile d'un magasin 50 et qui tombe par gravité à l'intérieur d'un logement défini dans le chariot 52 par deux bras longitudinaux 68 (figures 7 et 8), les extrémités avant et arrière de ce logement étant ouvertes de façon à ce que le chariot 52 puisse être déplacé sous les magasins 50 sans heurter les parties inférieures des cuvettes de réaction des piles d'ensembles 26 contenues dans les magasins 50 (figure 6).

Les moyens 24 d'alimentation en ensembles de cuvettes 26 fonctionnent de la façon suivante :

on suppose que le chariot 52 part de sa position extrême avant (position d'alimentation dans le trajet rectangulaire des ensembles de cuvettes) et commence à reculer vers le premier magasin 50, qui contient une pile d'ensembles 26 dont l'ensemble inférieur 26 est représenté en traits fantômes en figure 7. Au cours du mouvement de recul du chariot 52, dans le sens indiqué par la flèche 70, les galets 62 viennent buter sur les talons 60 des bras 54 du premier magasin 50 (partie supérieure de la figure 7) et commencent à les écarter vers l'extérieur (partie inférieure de la figure 7). Quand les bras 54 sont complètement écartés (figure 8), ils libèrent l'ensemble inférieur 26 de la pile contenue dans le magasin 50, qui descend vers le bas par gravité et tombe dans le logement prévu dans le chariot 52. Le chariot 52 poursuivant son mouvement vers l'arrière dans le sens indiqué par la flèche 70, ses galets 62 libèrent les bras 54 du premier magasin 50 qui se rapprochent l'un de l'autre sous l'action de leurs ressorts de rappel, leurs doigts 58 venant s'engager sous les rebords longitudinaux 30 de l'ensemble inférieur 26 de cuvettes de réaction.

La vitesse de déplacement du chariot 52 et la hauteur de chute d'un ensemble 26 sont définies de telle sorte que le passage des galets 62 sur les talons 60 des bras 54 libère un seul ensemble 26 de cuvettes et empêche la descente de deux ensembles 26 de cuvettes dans le chariot 52.

Le chariot 52 continue ensuite son mouvement de recul dans le sens indiqué par la flèche 70, pour passer sous les autres magasins 50 dont il écarte les bras 54 par ses galets 62, ce qui a pour effet de libérer l'ensemble inférieur 26 de cuvettes de réaction de chaque pile contenue dans ces magasins 50. Toutefois, les ensembles 26 ainsi libérés ne peuvent descendre dans le logement prévu à cet effet dans le chariot 52 déjà occupé par un ensemble 26 de cuvettes de réaction, de telle sorte que, quand ils sont libérés par les galets 62, les bras 54 viennent engager leurs doigts 58 sous les rebords de l'ensemble inférieur d'une pile, en remontant légèrement ce dernier sur une hauteur très faible.

Quand le chariot 52 est passé sous le dernier magasin 50, il est ramené vers l'avant, écarte au passage les bras 54 de chaque magasin, mais sans capturer d'ensemble 26 de cuvettes de réaction et revient dans la position d'alimentation située en avant du premier magasin 50.

Les rails 66 de support de l'ensemble 26 sont interrompus juste avant cette position d'alimentation, de sorte que l'ensemble 26 de cuvettes entraîné par le chariot dans cette position tombe par gravité à un niveau inférieur où il échappe aux bras 68 du chariot, ce qui permet de ramener celui-ci en arrière pour la capture d'un nouvel ensemble 26 de cuvettes de réaction.

On comprend, d'après ce qui précède, que le chariot 52 prend l'un après l'autre les ensembles 26 de cuvettes de réaction qui sont dans le premier magasin 50, puis ceux qui se trouvent dans le deuxième magasin 50 quand le premier magasin est vide, puis ceux qui se trouvent dans le troisième magasin 50 quand les deux premiers magasins sont vides, les magasins vides pouvant être remplis à nouveau à n'importe quel moment et sans qu'il soit nécessaire d'interrompre le fonctionnement de l'appareil de dosage.

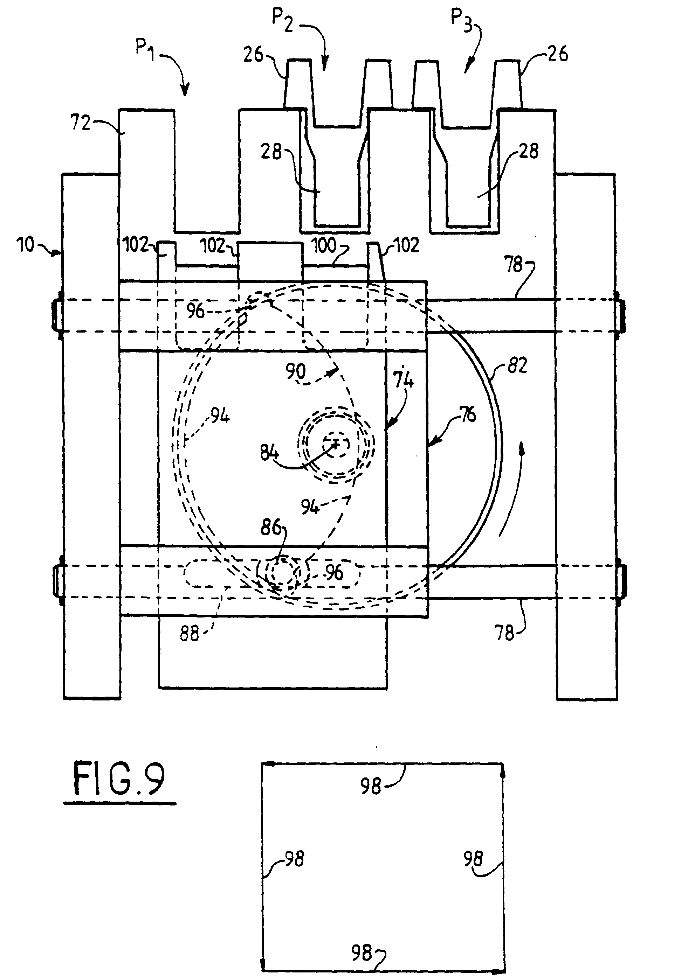

On fera maintenant référence aux figures 9 à 11 qui représentent schématiquement les moyens de déplacement transversal des ensembles de cuvettes aux extrémités longitudinales de leur trajet rectangulaire dans l'appareil de dosage.

Aux extrémités de ce trajet, les rails 38 sont prolongés par des profilés 72 qui définissent deux positions d'extrémités P1 et P3 où les ensembles de cuvettes 26 sont supportés pour moitié par les rails 38 et pour moitié par les profilés 72, et une position intermédiaire P2 qui est située entre les positions d'extrémités P1 et P3 (figure 9).

Les moyens de déplacement des ensembles de cuvettes 26 dans les positions P1, P2 et P3 comprennent une plaque verticale transversale 74 agencée dans l'intervalle entre les rails 38 et les profilés 72 et guidée verticalement dans un chariot 76 lui-même guidé en mouvement alternatif sur des tiges transversales horizontales 78 portées par le châssis 10, la plaque 74 et le chariot 76 étant entraînés par un système moteur à excentrique.

Ce système comprend un moteur électrique 80 sur l'arbre de sortie duquel est monté un disque vertical 82 mobile en rotation autour de son axe 84 et portant un galet excentré 86 qui est reçu dans une lumière horizontale 88 de la plaque verticale 74 et qui est mobile le long du bord d'une lumière incurvée 90 formée dans une paroi verticale 92 du chariot 76.

La lumière incurvée 90, approximativement en forme de citron, comprend deux arcs de cercle 94 opposés qui sont parallèles au bord du disque 82 et qui correspondent au trajet de la périphérie extérieure du galet 86 entraînés par le disque 82, et deux butées verticales 96 aux extrémités supérieure et inférieure des arcs de cercle 94.

Ces butées verticales 96 permettent de déplacer le chariot 76 horizontalement de gauche à droite et de droite à gauche en figure 9 quand le disque 82 est entraîné en rotation dans le sens indiqué par la flèche. Quand le galet 86 est dans la position représentée, en appui sur la butée verticale 96 inférieure, il va déplacer le chariot 76 vers la droite en figure 9 jusqu'à l'appliquer sur le châssis 10. Lors de ce déplacement, la plaque verticale 74 est déplacée verticalement sur une distance très faible.

Le galet 86 échappe à la butée verticale 96 quand le chariot 76 est appliqué sur le châssis 10, et commence alors à rouler sur la partie incurvée 94 de la lumière 90 ce qui a pour effet de déplacer verticalement vers le haut la plaque 74, sans déplacer le chariot 76. Ensuite, le galet 86 vient en appui sur la butée verticale supérieure 96 ce qui a pour effet de déplacer le chariot 76 vers la gauche en figure 9 jusqu'à l'amener en appui sur le châssis 10. Le galet 86 échappe alors à la butée verticale supérieure 96 et roule sur la partie inclinée 94 de la lumière 90, ce qui a pour effet de déplacer la plaque verticale 74 vers le bas et de la ramener dans la position représentée en figure 9.

Ainsi, quand le disque 82 et le galet 86 tournent de 360° autour de l'axe 84, la plaque 74 est déplacée le long d'un trajet sensiblement rectangulaire ou carré qui est schématisé par les flèches 98 en figure 9.

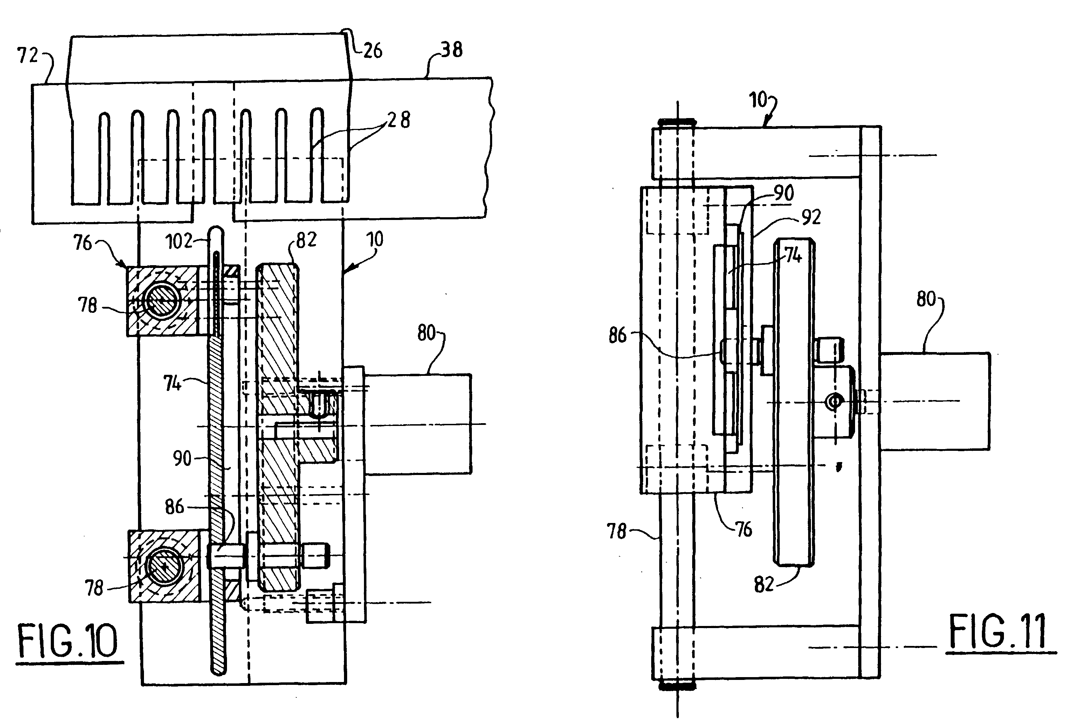

Le bord supérieur 100 de la plaque verticale 74 comporte trois dents 102 qui sont écartées d'une distance égale à l'intervalle entre les rails 38 ou les profilés 72 et qui sont destinées à s'engager sous les rebords latéraux 30 des ensembles de cuvettes reposant sur les rails 38 et les profilés 72 pour les soulever et les dégager de ces rails et profilés, tandis que le bord supérieur 100 de la plaque 74 s'engage entre les deux cuvettes médianes 28 de chaque ensemble 26 (figure 10).

Quand la plaque verticale 74 est déplacée selon le trajet schématisé par les flèches 98 en figure 9, elle soulève verticalement les deux ensembles de cuvettes 26 qui se trouvent dans les positions P3 et P2, les dégagent des rails et profilés 38 et 72, les amènent dans les positions P2 et P1, puis redescend verticalement pour déposer les ensembles 26 sur les rails et profilés 38'et 72.

Les ensembles de cuvettes 26 portés par la plaque 74 sont dans une position relativement stable du fait que leurs rebords 30 reposent sur les dents 102 de cette plaque et que le bord supérieur 100 de celle-ci est engagée entre les deux cuvettes médianes 28 de chaque ensemble 26.

Aux extrémités longitudinales de leur trajet rectangulaire, les ensembles 26 sont donc déplacés transversalement deux par deux sur les trois positions P3, P2 et P1 par la plaque verticale 74 et ses moyens d'entraînement, qui sont actionnés entre deux pas d'avance des ensembles 26 le long des grands côtés de leur trajet rectangulaire.

La position intermédiaire P2 prévue du côté des moyens 24 d'alimentation constitue à la fois une position d'alimentation d'ensembles de cuvettes neuves et une position d'éjection des ensembles de cuvettes usagées.

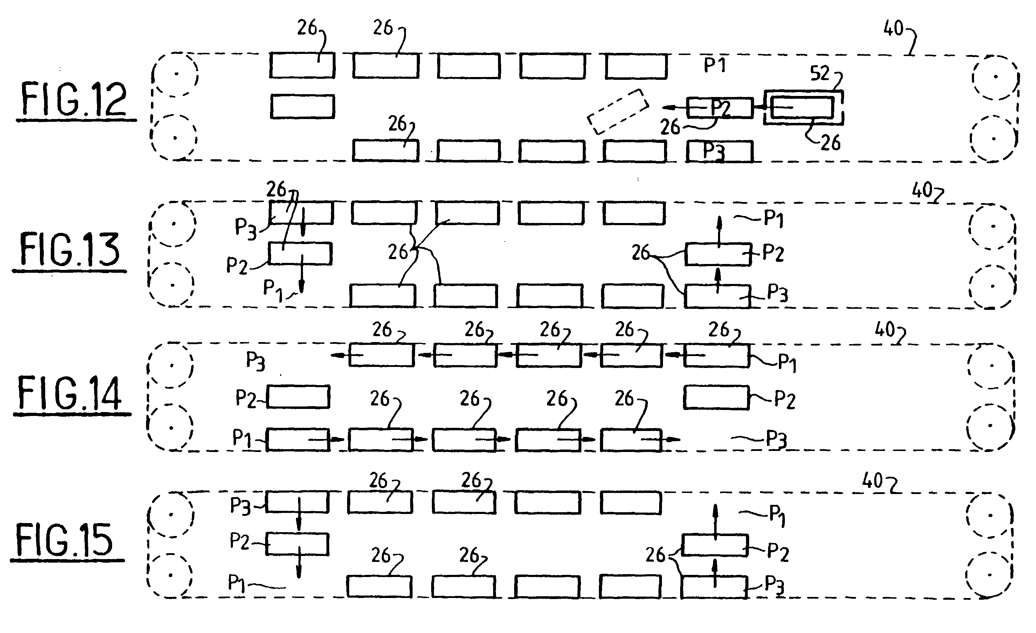

Comme on l'a représenté schématiquement en figure 12, quand un ensemble 26 de cuvettes neuves est amené par le chariot 52 dans la position d'alimentation P2, il éjecte de cette position l'ensemble 26 qui s'y trouvait et qui tombe dans une ouverture ou une glissière de chute (non représentée) menant à un bac ou à une poubelle.

Lorsqu'un ensemble neuf 26 de cuvettes de réaction a remplacé en position P2 l'ensemble de cuvettes usagées, les moyens de déplacement transversal prévus à cette extrémité du trajet rectangulaire déplacent dans les positions P1 et P2 les ensembles de cuvettes 26 qui se trouvaient dans les positions P2 et P3 respectivement, tandis qu'à l'autre extrémité de l'appareil, les moyens correspondants de déplacement transversal déplacent dans les positions P1 et P2 les ensembles de cuvettes de réaction qui se trouvaient dans les positions P2 et P3.

Les ensembles 26 sont déplacés pas à pas le long des grands côtés du trajet rectangulaire comme représenté en figure 14 jusqu'à ce que des ensembles 26 de cuvettes de réaction occupent à nouveau les positions P3 comme représenté en figure 15. Les moyens de déplacement transversal de ces ensembles sont alors actionnés pour transférer dans les positions P1 et P2 les ensembles de cuvettes de réaction qui se trouvaient dans les positions P2 et P3 respectivement.

Dans cet appareil, un ensemble 26 de cuvettes de réaction amené dans la position d'alimentation P2 doit effectuer deux fois le trajet rectangulaire complet pour un dosage monoréactif, et trois fois dans le cas d'un dosage bi-réactif, avant d'être éjecté comme représenté en figure 12.

L'appareil selon l'invention peut, dans les mêmes conditions que celles décrites dans la Demande Internationale WO-9614582, fonctionner à une cadence de 120 dosages par heure, de façon entièrement automatique.

## Revendications

1. Appareil automatique de dosage immunologique, comprenant des moyens de support, de guidage et de déplacement pas à pas d'ensembles (26) de cuvettes de réaction sur un trajet comprenant un nombre prédéterminé de positions, des moyens (12) de support d'échantillons à analyser, des moyens (14) de support de réactifs, des moyens (16, 18) de prélèvement de quantités déterminées d'échantillons et de réactifs et d'injection de ces prélèvements dans les cuvettes de réaction, ainsi que des moyens (20) de lavage des cuvettes, des moyens (22) de lecture des résultats et des moyens (24) d'alimentation en ensembles de cuvettes de réaction et d'éjection des ensembles de cuvettes usagées, **caractérisé en ce que** ledit appareil comprend en outre :
- deux rails rectilignes parallèles (38) de support et de guidage des ensembles (26) de cuvettes, lesdits rails définissant deux grands côtés opposés du trajet, et
- des moyens de déplacement transversal (72, 74, 76) desdits ensembles (26) de cuvettes sur trois positions P1, P2 et P3 comprenant deux positions d'extrémité P1 et P3 sur les grands côtés du trajet et une position intermédiaire P2 pouvant constituer à la fois une position d'éjection d'un ensemble (26) de cuvettes usagées et une position d'alimentation d'un ensemble (26) de cuvettes neuves, lesdits moyens de déplacement transversal (72, 74, 76) définissant deux petits côtés opposés du trajet de sorte que le trajet forme un rectangle fermé dont les coins sont constitués par les différentes positions P1 et P3.

2. Appareil selon la revendication 1, **caractérisé en ce que** les moyens de déplacement transversal sont adaptés pour déplacer les ensembles de cuvettes (26) deux par deux sur les trois positions précitées, un ensemble de cuvettes étant déplacé d'une position d'extrémité P3 vers la position intermédiaire P2 et l'autre ensemble de cuvettes étant déplacé de la position intermédiaire P2 vers l'autre position d'extrémité P1.

3. Appareil selon la revendication 1 ou 2, **caractérisé en ce que** les moyens de déplacement transversal des ensembles de cuvettes (26) sont adaptés pour être actionnés pendant les intervalles entre deux pas de déplacement des ensembles de cuvettes (26) sur les grands côtés du trajet précité.

4. Appareil selon la revendication 2 ou 3, **caractérisé en ce que** les moyens de déplacement transversal comprennent des moyens (74) de prise de deux ensembles de cuvettes (26) et des moyens de soulèvement, de déplacement transversal et de descente des moyens de prise.

5. Appareil selon la revendication 4, **caractérisé en ce que** les moyens de prise comprennent une plaque transversale verticale (74) déplaçable sous les ensembles de cuvettes de réaction, pour les soulever en s'engageant entre deux cuvettes de chaque ensemble.

6. Appareil selon la revendication 5, **caractérisé en ce que** la plaque transversale (74) est guidée en déplacement vertical dans un chariot (76) déplaçable le long d'un petit côté du trajet rectangulaire des ensembles de cuvettes par des moyens moteurs comprenant un disque rotatif (82) à galet excentré (86) guidé dans une lumière horizontale (88) de la plaque verticale (74) et dans une lumière incurvée (90) d'une paroi du chariot (76).

7. Appareil selon l'une des revendications précédentes, **caractérisé en ce que** les moyens (24) d'alimentation des ensembles de cuvettes neuves comprennent des magasins (50) de stockage de piles d'ensembles de cuvettes emboîtés les uns dans les autres, un chariot (52) de capture et de déplacement horizontal d'un ensemble de cuvettes (26), guidé sous les extrémités inférieures ouvertes des magasins (50) et déplaçable jusqu'à la position intermédiaire P2 précitée formant position d'alimentation et position d'éjection, les magasins (50) étant équipés de bras pivotants (54) qui retiennent l'ensemble de cuvettes (26) inférieur de chaque pile stockée et qui sont écartés par le chariot (52) à son passage sous la pile pour libérer l'ensemble inférieur de cuvettes de cette pile et le laisser tomber par gravité dans un logement agencé dans le chariot (52) lorsque ce logement n'est pas déjà occupé par un autre ensemble (26) de cuvettes de réaction.

8. Appareil selon la revendication 7, **caractérisé en ce que** les magasins de stockage (50) sont alignés avec ladite position intermédiaire P2 d'alimentation et d'éjection.

9. Appareil selon l'une des revendications précédentes, **caractérisé en ce que** les moyens d'éjection des ensembles (26) de cuvettes usagées comprennent une glissière ou une ouverture de chute formée dans l'alignement de la position intermédiaire P2 précitée, de sorte que l'amenée d'un ensemble (26) de cuvettes neuves dans cette position intermédiaire P2 par les moyens d'alimentation (24) provoque la poussée jusqu'à la glissière ou l'ouverture de chute de l'ensemble de cuvettes usagées occupant cette position intermédiaire P2.

10. Appareil selon l'une des revendications précédentes, **caractérisé en ce que** les moyens de déplacement des ensembles (26) de cuvettes sur les grands côtés du trajet précité comprennent une courroie crantée (40) venant en prise avec des nervures (34) des rebords longitudinaux (30) des ensembles de cuvettes (26), cette courroie (40) étant guidée le long du rail extérieur de chaque grand côté du trajet précité.

11. Appareil selon l'une des revendications précédentes, **caractérisé en ce que** les ensembles (26) de cuvettes comprennent des rebords longitudinaux (30) par lesquels ils reposent sur les rails (38) définissant les grands côtés du trajet précité, ces rebords comportant, de part et d'autre des cuvettes, des orifices (32) destinés à recevoir des doigts mobiles (44) de positionnement agencés au niveau des moyens précités (20) de lavage.

## Patentansprüche

1. Automatisches immunologisches Analysengerät mit Mitteln zur Halterung, Führung und schrittwelsen Verschiebung von Gruppen (26) von Reaktionsgefäßen auf einer Strecke mit einer vorbestimmten Anzahl von Stellungen, Mitteln (12) zur Halterung von zu analysierenden Proben, Mitteln (14) zur Halterung von Reagenzien, Mitteln (16, 18) zur Entnahme bestimmter Mengen von Proben und Reagenzien und zum Injizieren dieser Entnahmen in die Reaktionsgefäße sowie Mitteln (20) zum Reinigen der Gefäße, Mitteln (22) zum Lesen der Ergebnisse und Mitteln (24) zur Zuführung von Reaktionsgefäß-Gruppen und zum Auswerten der verbrauchten Reaktionsgefäß-Gruppen, **dadurch gekennzeichnet, dass** das Gerät weiterhin umfasst:
- zwei parallele geradlinige Schienen (38) zur Halterung und Führung der Gefäß-Gruppen (26), wobei die Schienen zwei gegenüberliegende Längsseiten der Strecke definieren,
- Mitteln (72, 74, 78) zur Querverschlebung der Gefäß-Gruppen (26) in drei Stellungen P1, P2 und P3 mit zwei Endstellungen P1 und P3 auf den Längsseiten der Strecke und einer Zwischenstellung P2, die sowohl eine Stellung zum Auswurf einer Gruppe (26) verbrauchter Gefäße als auch eine Stellung zur Zuführung einer Gruppe (26) neuer Gefäße darstellen kann, wobei die Querverschiebungsmittel (72, 74, 76) zwei gegenüberliegende Schmalseiten der Strecke definieren, so dass die Strecke ein geschlossenes Dreieck bildet, dessen Ecken aus den verschledenen Stellungen P1 und P3 bestehen.

2. Gerät nach Anspruch 1, **dadurch gekennzeichnet, dass** die Querverschiebungsmittel dafür ausgelegt sind, die Gefäß-Gruppen (26) paarweise in die drei vorgenannten Stellungen zu bringen, wobei eine Gefäß-Gruppe von einer Endstellung P3 in die Zwischenstellung P2 und die andere Gefäß-Gruppe von der Zwischenstellung P2 in die andere Endstellung P1 gebracht wird.

3. Gerät nach Anspruch 1 oder 2, **dadurch gekennzeichnet, dass** die Mittel zur Querverschiebung der Gefäß-Gruppen (26) dafür ausgelegt sind, während den Zeiträumen zwischen zwei Verschiebungsschritten der Gefäß-Gruppen (26) auf den Längsseiten der vorgenannten Strecke betätigt zu werden.

4. Gerät nach Anspruch 2 oder 3; **dadurch gekennzeichnet, dass** die Querverschiebungsmittel Mittel (74) zum Greifen zweler Gefäß-Gruppen (26) und Mittel zum Anheben, Querverschieben und Absenken der Greifmittel umfassen.

5. Gerät nach Anspruch 4, **dadurch gekennzeichnet, dass** die Greifmittel eine vertikale Querplatte (74) umfassen, die unter den Reaktionsgefäß-Gruppen verschiebbar ist, um diese durch Eingreifen zwischen zwei Gefäßen jeder Gruppe anzuheben.

6. Gerät nach Anspruch 5, **dadurch gekennzeichnet, dass** die Querplatte (74) in vertikaler Bewegung in einem Schlitten (76) geführt wird, der entlang einer Schmalseite der rechteckigen Strecke der Gefäß-Gruppen durch Antriebsmittel verfahrbar ist, welche Antriebsmittel eine rotierende Scheibe (82) mit einer außermittigen Rolle (86) umfassen, die in einem horizontalen Schlitz (88) der vertikalen Platte (74) und in einem gekrümmten Schlitz (90) einer Wand des Schlittens (76) geführt wird.

7. Gerät nach einem der vorhergehenden Ansprüche, **dadurch gekennzeichnet, dass** die Mittel (24) zur Zuführung der neuen Gefäß-Gruppen Magazine (50) zur Lagerung von Stapeln ineinander verschachtelter Gefäß-Gruppen und einen Schlitten (50) zum Fassen und zur Horizontalverschiebung einer Gefäß-Gruppe (26) umfassen, der unter den offenen unteren Enden der Magazine (50) geführt und bis zur vorgenannten, die Zuführungs- und Auswurfstellung bildende Zwischenstellung P2 verschiebbar ist, wobei die Magazine (50) mit Schwenkarmen (54) versehen sind, die die untere Gefäß-Gruppe (26) jedes gelagerten Stapels zurückhalten und die durch den Schlitten (52) bei seinem Durchlauf unter dem Stapel gespreizt werden, um die untere Gefäß-Gruppe dieses Stapels freizugeben und sie durch Schwerkraft in eine im Schlitten (52) angeordnete Aufnahme fallen zu lassen, wenn diese Aufnahme nicht bereits von einer anderen Reaktionsgefäß-Gruppe (26) belegt ist.

8. Gerät nach Anspruch 7, **dadurch gekennzeichnet, dass** die Lagermagazine (50) mit der Zuführungs- und Auswurf-Zwischenstellung P2 fluchten.

9. Gerät nach einem der vorhergehenden Ansprüche, **dadurch gekennzeichnet, dass** die Mittel zum Auswurf der Gruppen (26) verbrauchter Gefäße eine Führung oder eine Fallöffnung aufweisen, die in der Fluchtlinie der vorgenannten Zwischenstellung P2 ausgebildet ist, so dass durch die Zuführung einer Gruppe (26) neuer Gefäße in dieser Zwischenstellung P2 über die Zuführungsmittel (24) der Vorschub der Gruppe verbrauchter Gefäße, die diese Zwischenstellung P2 belegen, bis zur Führung oder zur Fallöffnung bewirkt wird.

10. Gerät nach einem der vorhergehenden Ansprüche, **dadurch gekennzeichnet, dass** die Mittel zur Verschiebung der Gefäß-Gruppen (26) auf den Längsseiten der vorgenannten Strecke einen Zahnriemen umfassen (40), der mit den Rippen (34) der Längskanten (30) des Gefäß-Gruppen (26) in Eingriff kommt, wobei dieser Zahnriemen (40) entlang der äußeren Schiene jeder Längsseite der vorgenannten Strecke geführt ist.

11. Gerät nach einem der vorhergehenden Ansprüche, **dadurch gekennzeichnet, dass** die Gefäß-Gruppen (26) Längskanten (30) aufweisen, durch die sie auf den Schlenen (38) aufliegen, welche die Längsselten der vorgenannten Strecke bilden, wobei diese Kanten belderseits der Gefäße Öffnungen (32) zur Aufnahme beweglicher Positionlerungszapfen (44) umfassen, die im Bereich der vorgenannten Mittel (20) zum Reinigen angeordnet sind.

## Claims

1. Automatic immunological assay apparatus, comprising means for supporting, guiding and moving assemblies (26) of reaction vessel(s) in steps over a path comprising a number of predetermined positions, means (12) for supporting the samples for analysis, means (14) for supporting the reagents, means (16, 18) for sampling predetermined quantities of samples and reagents and for injecting these samples into the reaction vessel(s), as well as means (20) for washing the vessel(s), means (22) for reading the results and means (24) for feeding in assemblies of reaction vessel(s) and for ejecting assemblies of used vessel(s), **characterised in that** the said apparatus additionally includes :
- two straight parallel rails (38) for supporting and guiding the assemblies (26) of vessel(s), the said rails defining the two opposite long sides of the path, and
- means (72, 74, 76) for the transverse movement of the said assemblies (26) of vessel(s) over three positions P1, P2 and P3 comprising two end positions P1 and P3 on the long sides of the path and an intermediate position P2 that can constitute at the same time a position for ejecting an assembly (26) of used vessel(s) and a position for feeding in an assembly (26) of new vessel(s), the said means of transverse movement (72, 74, 76) defining the two opposite short sides of the path so that the path forms a closed rectangle of which the corners are made up of the different positions P1 and P3.

2. Apparatus according to claim 1, **characterised in that** the means of transverse movement are adapted so as to move the assemblies of vessel(s) (26) two-by-two over the three aforementioned positions, one assembly of vessel(s) being moved from one end position P3 to the intermediate position P2 and the other assembly of vessel(s) being moved from the intermediate position P2 to the other end position P1.

3. Apparatus according to claim 1 or 2, **characterised in that** the means for the transverse movement of assemblies of vessel(s) (26) are adapted so as to be actuated during the intervals between two movement steps of the assemblies of vessel(s) (26) over the long sides of the aforementioned path.

4. Apparatus according to claim 2 or 3, **characterised in that** the means of transverse movement comprise means (74) for holding two assemblies of vessel(s) (26) and means for raising, moving transversely and lowering the holding means.

5. Apparatus according to claim 4, **characterised in that** the holding means comprise a vertical transverse plate (74) that can move under the assemblies of reaction vessel(s), so as to raise them while entering between two vessel(s) of each assembly.

6. Apparatus according to claim 5, **characterised in that** the transverse plate (74) is guided in vertical movement in a carriage (76) that can move along a short side of the rectangular path of the assemblies of vessel(s) by virtue of drive means comprising a rotating disc (82) with an eccentric roller (86) guided in a horizontal opening (88) in the vertical plate (74) and in an inwardly curving opening (90) in a wall of the carriage (76).

7. Apparatus according one of the preceding claims, **characterised in that** the means (24) for feeding in the assemblies of new vessel(s) comprise magazines (50) for storing stacks of assemblies of vessel(s) nested in each other, a carriage (52) for capturing and moving horizontally an assembly of vessel(s) (26), guided under the open lower ends of the magazines (50) and movable as far as the aforementioned intermediate position P2 forming the feed position and the ejection position, the magazines (50) being fitted with pivoting arms (54) which hold the lower assembly of vessel(s) (26) of each stored stack and which are separated by the carriage (52) as it passes under the stack so as to release the lower assembly of vessel(s) of this stack and to allow it to fall by gravity into a housing provided in the carriage (52) when this housing is not already occupied by another assembly (26) of reaction vessel(s).

8. Apparatus according to claim 7, **characterised in that** the storage magazines (50) are in line with the said intermediate feeding and ejection intermediate position.

9. Apparatus according to one of the preceding claims, **characterised in that** the means for ejecting the assemblies (26) of used vessel(s) comprise a slide or a drop opening formed in the alignment of the aforementioned intermediate position P2, so that bringing an assembly (26) of new vessel(s) into this intermediate position P2 by the feed means (24) causes the assembly of used vessel(s) occupying this intermediate position P2 to be pushed to the slide or drop opening.

10. Apparatus according to one of the preceding claims, **characterised in that** the means for moving the assemblies (26) of vessel(s) over the long sides of the aforementioned path comprise a notched belt (40) meshing with ribs (34) on the longitudinal edges (30) of the assemblies (26) of vessel(s), this belt (40) being guided along the outer rail of each long side of the aforementioned path.

11. Apparatus according to one of the preceding claims, **characterised in that** the assemblies (26) of vessel(s) include longitudinal edges (30) by which they rest on the rails (38) defining the long sides of the aforementioned path, these edges, having either side of the vessel(s), orifices (32) designed to receive movable positioning fingers (44) arranged in the region of aforementioned washing means (20).
